# EUROPEAN PATENT APPLICATION

(11) **EP 3 476 672 A1**
(43) Date of publication of application: **01.05.2019**
(21) Application number: 17198955.1
(22) Date of filing: 27.10.2017
(51) Int. Cl.: B60R 25/25, H04W 12/06, G06F 21/32

(54) **MOBILE TRANSMITTER UNIT AND METHOD FOR CONTROLLING A FUNCTION OF A TECHNICAL SYSTEM USING SUCH MOBILE TRANSMITTER UNIT**

(71) Applicant: Continental Automotive GmbH, 30165 Hannover (DE)
(72) Inventor: Kashyap, Deepak, 560086 Bangalore, Karnataka (IN)

(57) **Abstract**

Mobile transmitter unit (20) for wirelessly transmitting control data to a controlling device (5) for controlling at least one function of a technical system (1), e.g. a vehicle, wherein the mobile transmitter unit (20) comprises a control data (22) generating means and a control data transmitting means (24). For improving the comfort and safety in controlling the at least one function, the mobile transmitter unit (20) further comprises means (26) for attaching the mobile transmitter unit (20) to a limb of a user, a heartbeat pattern monitoring device (28) for monitoring a heartbeat pattern of the user when the mobile transmitter unit (20) is attached to the limb, and a heartbeat pattern recognition device (30) for identifying the user as a valid user.

## Description

The present invention relates to a mobile transmitter unit for wirelessly transmitting control data to a controlling device for controlling at least one function of a technical system taking into account the transmitted control data, wherein the mobile transmitter unit comprises
- a control data generating means for generating control data,
- a control data transmitting means for wirelessly transmitting the generated control data.

Further, the invention relates to a combination of such mobile transmitter unit and a corresponding controlling device.

Further, the invention relates to a method for controlling at least one function of a technical system by means of a controlling device and by use of such mobile transmitter unit.

Such mobile transmitter units according to the preamble of claim 1 are well-known from the prior art. As an example, such mobile transmitter units are often realised by "electronic keys" (e.g. in the form of a keyfob) used in combination with a modern vehicle for wirelessly transmitting control data to a controlling device (e.g. a central "electronic control unit", ECU) of the vehicle, for controlling at least one function of the vehicle (e.g. an "access function" as unlocking and locking of the vehicle's doors) .

In this automobile prior art, the wireless transmission is typically accomplished by an RF (radiofreqency) transmission, and the transmitted control data typically comprise at least an ID code (assigned to the controlling device of the particular vehicle).

Similar mobile transmitter units are also known from other technical fields, i.e. wherein the controlled technical system is different from a vehicle (e.g. "remote control units" etc.).

The known mobile transmitter units do not authenticate the user as such, which means that anyone with the mobile transmitter unit can conduct a controlling of the respective technical system. This becomes a problem in case of a lost or stolen mobile transmitter unit. In fact, known mobile transmitter units as e.g. keyfobs for enabling access to vehicles are often mislaid or lost, so that there exists a risk of misuse of such keyfobs by unauthorised persons.

It is an object of the present invention, to improve the comfort and safety in controlling at least one function (e.g. access function(s))of a technical system (e.g. vehicle) by use of a mobile transmitter unit as described above.

According to an aspect of the invention, this object is solved by a mobile transmitter unit according to claim 1. According to further aspects of the invention, a combination of such mobile transmitter unit and a controlling device according to claim 8, and a method for controlling according to claim 13 are proposed. The dependent claims are directed to advantageous further developments of the invention.

The mobile transmitter unit according to the present invention further comprises
- an attachment means for attaching the mobile transmitter unit to a limb of a user,
- a heartbeat pattern monitoring device for monitoring a heartbeat pattern of the user when the mobile transmitter unit is attached to the limb of the user,
- a heartbeat pattern recognition device for identifying the user as a valid user when the monitored heartbeat pattern matches with a previously stored valid user heartbeat pattern,

wherein the control data generating means is designed to generate the control data dependent on the circumstance whether the user has been or has not been identified as a valid user.

In an embodiment, the attachment means comprises a band, preferably an adjustable and/or openable band, fixed at a body (e.g. casing) of the mobile transmitter unit and designed for being laid around the respective limb of the user.

In particular, the attachment means can be designed for attaching the mobile transmitter unit to a wrist of the user, e.g. comprising a band (wristband) adequately dimensioned to fit snuggly at the wrist.

The band can comprise at least one elastic band portion and/or another means for enabling attaching and detaching the mobile transmitter unit at and from the respective limb (e.g. wrist), e.g. by adjusting and/or opening/closing the band. For example, an attachment band can be equipped with a hook and loop fastener (velcro fastener).

Advantageously, as to the concrete design of the attachment means, all such means known from the field of wristwatches, "smartwatches" and bracelets can be used also in the invention.

In an embodiment, the heartbeat pattern monitoring device comprises at least one electrocardiogram (ECG) sensor for providing at least one heartbeat pattern signal (ECG signal) of the user, when the mobile transmitter unit is attached at the user's limb (e.g. wrist).

An ECG sensor, or a plurality of such ECG sensors can be located at a surface portion of the mobile transmitter unit and in particular at a surface portion of an attachment band, which contacts the user's limb when the mobile transmitter unit is attached to that limb.

The heartbeat pattern monitoring device may be designed for providing one or more time-dependent ECG signals.

In an embodiment, the heartbeat pattern monitoring device additionally conducts a signal processing for providing a heartbeat pattern information. Such information may represent e.g. the "typical" running of said signal or signals over one heartbeat period, derived (e.g. calculated) from the running of this or these signals over more than one heartbeat period (e.g. using an averaging algorithm).

Alternatively or in addition, such processing may provide one or more heartbeat pattern parameters representing and quantifying individual features of the monitored heartbeat pattern (e.g. length of particular intervals in the ECG, ratios of such intervals, peak heights in the ECG signal (s), ratios of such peak heights, etc.).

It is known that the human heartbeat pattern is unique like a fingerprint, but can not be replicated as easily as a fingerprint. Therefore, with the heartbeat pattern recognition device, it is possible to identify the user as a valid user (authorized to wear and use the mobile transmitter unit) when the monitored heartbeat pattern as represented e.g. by the above mentioned heartbeat pattern parameters matches with a previously stored valid user heartbeat pattern (e.g. stored also in form of valid user heartbeat pattern parameters). Thus, a "biometric identification" is implemented by means of the heartbeat monitoring.

In an embodiment, the heartbeat pattern recognition device is implemented as a functionality of a processing device, e.g. software-controlled processing device like a microcontroller, integrated in the mobile transmitter unit.

The processing device can be equipped with or coupled to a storing device for storing suitable software code providing the heartbeat pattern recognition functionality (inter alia).

For example the same processing device may be used also for conducting the above mentioned processing of the one or more ECG sensor signals, and for storing the above mentioned valid user heartbeat pattern (e.g. represented by heartbeat pattern parameters of at least one valid user).

Advantageously, as to the concrete design of the heartbeat pattern monitoring device and the heartbeat pattern recognition device, there may be a fallback on corresponding prior art in this field. For example, reference is made to the following publications: Development of Heartbeat Detection Kit For Biometric Authentication System, D.A. Ramli, M.Y.Hooi, K.J.Chee, 20th International Conference on Knowledge Based and Intelligent Information and Engineering Systems; Heart-Based Biometrics and Possible Use of Heart Rate Variability in Biometric Recognition Systems, Nazneen Akhter, Sumegh Tharewal, Vijay Kale, Ashish Bhalerao and K.V. Kale; Heartbeat Biometrics for Remote Authentication Using Sensor Embedded Computing Devices, Md Saiful Islam, Department of Computer Science, College of Computer and Information Science, King Saud University, Riyadh 11543, Saudi Arabia, Received 13 October 2014, Accepted 21 December 2014; PERSONAL IDENTIFICATION AND AUTHENTICATION BY USING "THE WAY THE HEART BEATS", Johan F. du Preez, Prof S.H. von Solms, University of Johannesburg (South Africa).

Due to the fact, that according to the invention the control data generating means is designed to generate the control data dependent on the circumstance whether the user has been or has not been identified as a valid user, the mobile transmitter unit provides a protection against an abusive use of the mobile transmitter unit by an unauthorized person.

A further advantage of the invention is that the mobile transmitter unit can be attached to the user's limb, so that the mobile transmitter unit is less easy to mislay or to lose.

In an embodiment, the control data generating means is implemented by a software-controlled processing device, preferably the above mentioned processing device implementing also the functionality of heartbeat pattern recognition.

The dependency of the control data generation on the circumstance whether the user has been identified as a valid user or not, can be realized in different ways.

In this respect, in an embodiment, the control data generating means is designed to incorporate a previously stored ID code into the control data to be transmitted at least when the user has been identified as a valid user. If the user has not been identified as a valid user, the ID code can be suppressed (not incorporated) into the control data to be transmitted. In this way, a high degree of safety is achieved.

Alternatively or in addition, the control data generating means can be designed to partially or completely refrain from generating the control data when the user has not been identified as a valid user. For example, the above mentioned ID code may be omitted from the transferred control data when the user has not been identified as a valid user.

Alternatively or in addition, the control data generating means can be designed to modify at least one data element of the control data dependent on the circumstance whether the user has been or has not been identified as a valid user. In particular, in this way, the information about the result of the user identifying step itself (valid user or not valid user) can be incorporated into the control data to be transmitted.

In an embodiment, the control data transmitting means comprises at least one RF signal transmitting device, e.g. a Bluetooth device and/or an NFC device. Preferably, the control data transmitting means is designed for a bidirectional data communication, i.e. not only for sending control data to the controlling device, but also for receiving signals or data (e.g. request signals) from the controlling device.

In an embodiment, the mobile transmitter unit further comprises an "operational control detection means" for detecting an intended operational action of the user, wherein the control data generating means is further designed to generate the control data dependent on an intended operational action of the user detected by the operational control detection means.

The operational control detection means can comprise e.g. one or more keys (buttons) operable by the user as a means for inputting information as e.g. a control command.

A plurality of such keys may constitute a keyboard of the mobile transmitter unit.

Each key or a plurality of keys may also be implemented as "softkey(s)" on a touch-sensitive display device of the mobile transmitter unit.

In an embodiment, the operational control detection means are provided for inputting control commands related to the controlling of the respective technical system.

For example, if the technical is a vehicle, such control commands can be provided at least for initiating one or more of the following functions: unlocking the vehicle (central unlocking, and/or unlocking a particular closure device as e.g. a door or a tailgate), locking the vehicle (central locking, or locking of a particular closure device), opening a particular closure device (e.g. door, tailgate etc.), closing a particular closure device, turning on/off a vehicle lightning (e.g. so-called welcome light), turning on/off an acoustic signaling device (e.g. horn) .

In an embodiment, the operational control detection means are provided for inputting setting commands related to any kind of settings with respect to the operation of the mobile transmitter unit.

For example, an important setting may be the valid user heartbeat pattern stored in the mobile transmitter unit, e.g. stored in a storing device associated to a processing device by which the heartbeat pattern recognition for identifying a user is accomplished.

In an embodiment, for "learning" (programming) a heartbeat pattern of a user as a valid user heartbeat pattern, it can be provided that a user attaches the mobile transmitter unit at the limb (e.g. wrist) and inputs predetermined authorizing information (e.g. a PIN code or a particular sequence of key operations, respectively), wherein the input of this information may be provided before and/or after the attachment of the mobile transmitter unit at the limb. In this way, the mobile transmitter unit can monitor the heartbeat pattern and then store this heartbeat pattern (e.g. represented by heartbeat pattern parameters) for later use in the heartbeat pattern recognition as a valid user heartbeat pattern.

In an embodiment, the mobile transmitter unit is designed to enable storing of more than one valid user heartbeat pattern, so that more than one person can be defined as valid user.

In an embodiment, the mobile transmitter unit is designed to conduct a self-learning adaptation of the stored valid user heartbeat pattern by means of detecting gradual changes of the monitored heartbeat pattern of a user and updating the stored valid user heartbeat pattern of this user when such gradual changes are detected. Gradual changes may be recognized e.g. by observing and analyzing the monitored heartbeat pattern over a period in the order of magnitude of some days or some weeks. This functionality may be accomplished e.g. by the heartbeat pattern recognition device. Advantageously according to this embodiment, a user does not need to re-learn (re-program) the mobile transmitter unit, when the heartbeat pattern has gradually changed, e.g. due to ageing or illness etc., within such periods. Further, the user will not be surprised by a sudden failure of the identification as a valid user.

In a preferred embodiment, the operational control detection means comprises
- a motion pattern monitoring device for monitoring a motion pattern of the mobile transmitter unit,
- a gesture recognition device for detecting an intended operational action of the user when the monitored motion pattern matches with a previously stored motion pattern assigned to the intended operational action.

The motion pattern monitoring device can comprise e.g. one or more acceleration sensors for detecting the motion of the mobile transmitter unit. As to the concrete design of such a sensor arrangement, a fallback on corresponding prior art of such sensors used in smartphones is possible. Taking into account the directionality of the gravitational acceleration, such a sensor arrangement is suitable not only for detecting motion in the narrow sense but also for detecting the orientation of the mobile transmitter unit.

Insofar, the term "motion" has to be understood in a broad sense and can cover one or more physical quantities related to a change of the position and/or a change of orientation of the mobile transmitter unit.

In this way, it is possible to recognize predetermined gestures of the user made by the user's limb at which the mobile transmitter unit is attached.

The gesture recognition device can be implemented e.g. by a software-controlled processing device to which the monitored motion pattern is inputted and which conducts a comparison of the inputted motion pattern (e.g. represented by particular motion pattern parameters) with one or more previously stored motion patterns.

Such particular motion patterns can be stored e.g. in a storing device, which is coupled to the processing device and which can also be used for storing the software by which the gesture recognition functionality is accomplished.

In an embodiment, the mobile transmitter unit comprises a processing device with associated storing device used for the heartbeat pattern recognition as well as the gesture recognition.

In principle, all embodiments or design details described herein for the heartbeat pattern recognition can be analogously provided for gesture recognition, e.g. use of a software-controlled processing device, possibility of "learning" particular gestures by inputs via the operational control detection means, self-learning adaptation of previously stored motion pattern (s) by detecting gradual changes of the executed gestures of a user and subsequent update of the respective stored motion pattern (s) etc.

If the mobile transmitter unit is designed to enable storing of more than one valid user heartbeat pattern, in an advantageous embodiment the mobile transmitter unit is designed to store one or more particular motion patterns (each assigned to a particular intended operational action) separately for each valid user.

In this way, each user can advantageously define or modify individual gestures for use in the gesture recognition when the respective user wears the mobile transmitter unit.

Preferably, there are provided "free configurable gestures" due to a possibility for the user to "learn" (program) such arbitrary gestures in the mobile transmitter unit, e.g. by conducting the respective gesture(s), so that this/these gesture(s) can be monitored by the motion pattern monitoring device for subsequent storing it/them as the "previously stored motion pattern (s) " for later use in gesture recognition.

In an embodiment, for "learning" (programming) a particular gesture of a user, e.g. associated with a particular control command, it can be provided that a user attaches the mobile transmitter unit at the limb (e.g. wrist) and inputs predetermined authorizing information (e.g. a PIN code and/or a particular sequence of key operations, respectively) and conducts the individual gesture (The completion of the gesture may be confirmed e.g. by a standstill of the limb for a preset time and/or by pressing a key). In this way, the mobile transmitter unit can monitor the motion pattern and then store this motion pattern (e.g. represented by motion pattern parameters) for later use in the gesture recognition.

For example, if the technical system is a vehicle, such definition of individual gestures can comprise the definition of one or more gestures for initiating one or more of the following functions: unlocking the vehicle (e.g. central unlocking), locking the vehicle (e.g. central locking), unlocking a particular closure device (e.g. door or tailgate), locking of a particular closure device, opening a particular closure device (e.g. door or tailgate), closing a particular closure device, turning on or turniung off a vehicle lightning (e.g. so-called welcome light), turning on/off an acoustic signaling device (e.g. horn).

According to a further aspect of the invention, the above mentioned technical object is solved by a combination of a controlling device for controlling at least one function of a technical system taking into account control data wirelessly transmitted to the controlling device, and a mobile transmitter unit as described herein for generating and wirelessly transmitting the control data to the controlling device.

In an embodiment of such combination, the controlling device is designed to trigger an execution of the at least one function when corresponding control data have been transmitted to the controlling device.

In an embodiment, the technical system is a vehicle, e.g. a motor vehicle as e.g. a passenger car or a lorry.

In an embodiment, the at least one function comprises unlocking and/or locking a closure device of the technical system.

In a preferred advantageous embodiment, the technical system is a vehicle (e.g. motor vehicle, passenger car etc.) and the at least one function comprises unlocking and/or locking a closure device (e.g. door, tailgate, openable roof etc.) of the vehicle. With this embodiment, a so-called access system for a vehicle is realised. Alternatively or in addition, the at least one function comprises opening and/or closing of at least one closure device (e.g. tailgate, trunk lid, or openable roof system).

Systems and methods for controlling vehicle access by use of mobile transmitter units in various designs are well-known in the field of modern motor vehicles.

In order to prevent unauthorized access to a parked vehicle, modern access systems use electronic security systems in which for the authentication a data communication is typically carried out via an RF link between a controlling device of the vehicle and a user-carried mobile transmitter unit.

In the case of a known "active access system", control signals including an ID code are wirelessly sent by the mobile transmitter unit to the vehicle-side controlling device, for example upon pressing a corresponding key (button) on the mobile transmitter unit, whereupon one or more closure devices of the vehicle (e.g. vehicle doors) are unlocked or locked, if the transmitted ID code is correct, i.e. is the ID code that is assigned to the vehicle-side controlling device.

In the case of a known "passive access system", request signals are emitted by the controlling device of the vehicle at predetermined time intervals in order to check whether a mobile transmitter unit is located in an approaching area around the vehicle. When a mobile transmitter unit approaches the vehicle and can finally receive the vehicle's request signals, it will respond to the receipt of such request signal to initiate the authentication. To this end, for example, digital data are exchanged between the vehicle-side controlling device and the mobile transmitter unit, in which ultimately the mobile transmitter unit transmits its ID code. If the ID code is correct, an unlocking of the corresponding vehicle door or an unlocking of all vehicle doors by operating a door handle is enabled.

A prefered use of a mobile transmitter unit as described herein is the use as a mobile transmitter unit for such active or passive access system for a vehicle. Insofar, the mobile transmitter unit according to the invention, or a combination of such mobile transmitter unit and a controlling device of a vehicle, can be designed to accomplish the functionalities mentioned above.

The essential modifications of such a mobile transmitter unit according to the invention in comparison with the already known mobile transmitter units is the provision of the attachment means, the heartbeat pattern monitoring device, the heartbeat pattern recognition device, and the design of the control data generating means, according to which the control data is generated dependent on the circumstance whether the user has been or has not been identified as a valid user (by means of the heartbeat pattern recognition device).

In an embodiment of an access system for a vehicle (combination of vehicle-side controlling device and user-side mobile transmitter unit) or an embodiment of a corresponding method for controlling the access system for the vehicle, the system or method, respectively, is designed to conduct a so-called localisation of the mobile transmitter unit, i.e. a determination of the relative position of the mobile transmitter unit relative to the vehicle. Suitable methods for localisation are known from the prior art (e.g. with use of at least two vehicle-side RF antennas for the communication between the mobile transmitter unit and the vehicle-side controlling device).

In this embodiment, it can be provided that at least one function initiated by a particular gesture is depended on the result of the localisation.

For example, there can be provided a predefined gesture (e.g. "wiping upwards") for initiating a vehicle's closure device unlocking (or e.g. opening if already unlocked), when the user (and thus the mobile transmitter unit) is located nearby this vehicle closure, whereas e.g. another gesture (e.g. "wiping downwards") can initiate a closing (or locking if already closed) of the closure device at which the user is located.

In an embodiment of the invention, the at least one function comprises starting and/or stopping a driving motor of the technical system. In the case of a technical system formed by a vehicle, such driving motor in particular may be a driving motor which can act on the drive train for accelerating the vehicle. According to a further aspect of the invention, the above-mentioned technical object is solved by a method for controlling at least one function of a technical system, comprising
- controlling at least one function of a technical system by means of a controlling device, taking into account control data wirelessly transmitted to the controlling device, and
- using a mobile transmitter unit as described herein for generating and wirelessly transmitting the control data to the controlling device.

All embodiments or design details described herein for the mobile transmitter unit or the combination of such mobile transmitter unit and a controlling device can be analogously provided also for the method for controlling according to the invention, and vice versa.

### Brief Description of the Drawings

The invention will now be described by way of example embodiments with reference to the accompanying drawings, in which
- Fig. 1: shows a vehicle equipped with components which constitute together with a mobile transmitter unit a vehicle access system according to an embodiment,
- Fig. 2: shows a block diagram of the mobile transmitter unit used in the example of Fig. 1,
- Fig. 3: shows a block diagram of another technical implementation of such mobile transmitter unit,
- Fig. 4: shows a block diagram of a mobile transmitter unit according to a further embodiment, and
- Fig. 5: shows a block diagram of another technical implementation of such mobile transmitter unit.

### Description of the Preferred Embodiments

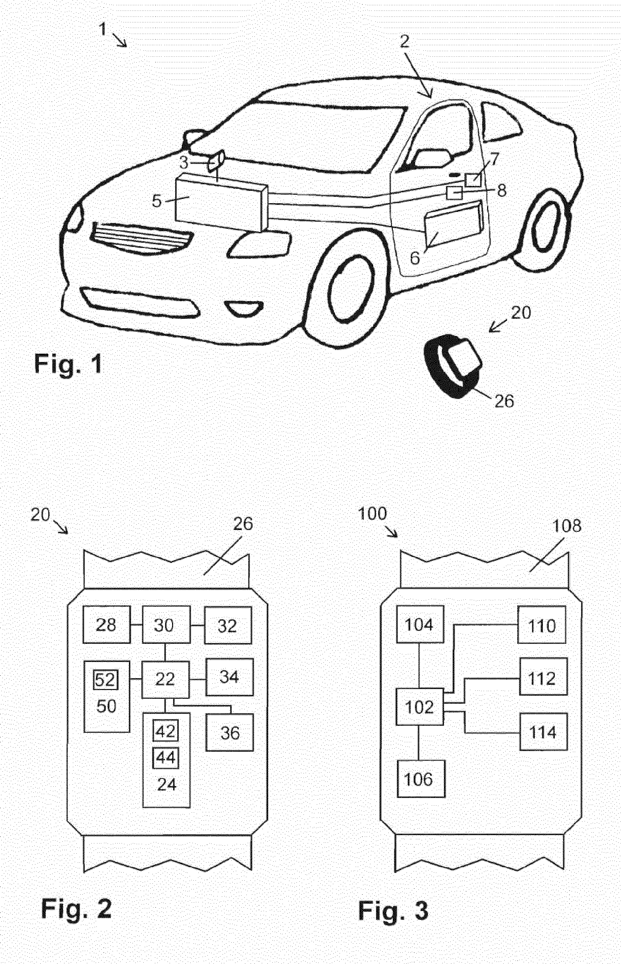

Fig. 1 shows a vehicle 1 (e.g. passenger car) . As an example for a closure device of the vehicle 1, a vehicle door 2 is shown in Fig. 1.

As usual for modern vehicles, the vehicle 1 is equipped with a (not shown) central locking system for simultaneously unlocking and simultaneously locking a plurality of closure devices as the vehicle door 2.

The vehicle 1 is equipped with (not shown) actuators for realising a mechanical unlocking/locking of the respective closure devices. Such actuators are known and are typically designed as electromechanical actuators.

In the shown example, electromechanical actuators of the vehicle's unlocking/locking system are arranged at the respective closure devices (e.g. doors, tailgate etc.) and controlled by means of a controlling device 5 of the vehicle 1. Furthermore, at least one actuator (e.g. electromechanical actuator) can be provided for accomplishing an automatic opening and closing of a respective closure device of the vehicle 1. In this case, such actuator can be controlled also by the controlling device 5.

The controlling device 5 is equipped with a means for receiving control data wirelessly transmitted from a mobile transmitter unit 20 of an user.

As in conventional systems for access control for a vehicle, the shown access system comprised of the vehicle-side controlling device 5 and the mobile transmitter unit 20 carried by a user may constitute an "active access system" or a "passive access system" as already explained herein.

In the shown example, the controlling device 5 and the mobile transmitter unit 20 constitute a passive access system, which means that the controlling device 5 is equipped with a means for wirelessly sending request signals at predetermined time intervals. When a user accompanied by the mobile transmitter unit 20 enters in an approaching area around the vehicle 1, the mobile transmitter unit 20 can receive such request signal and can respond to the receipt of a request signal to initiate an authentication process (by bidirectional wireless data communication). In this process, the mobile transmitter unit 20 ultimately transmits its ID code with the control data transmitted to the controlling device 5. If the ID code is correct, the controlling device 5 for example allows the user to initiate unlocking of the vehicle door 2 by actuating a door handle.

Fig. 2 shows a block diagram of the mobile transmitter unit 20 according to an embodiment.

The mobile transmitter unit 20 for wirelessly transmitting control data to the vehicle-side controlling device 5, for controlling in the shown example at least unlocking and/or locking the vehicle door 2, taking into account the transmitted control data, comprises
- a control data generating means 22 for generating the control data,
- a control data transmitting means 24 for wirelessly transmitting the generated control data, comprising in the example a Bluetooth device 42 and an NFC device 44,
- an attachment means 26 for attaching the mobile transmitter unit 20 to a wrist of a user,
- a heartbeat pattern monitoring device 28 for monitoring a heartbeat pattern of the user when the mobile transmitter unit 20 is attached to the wrist of the user,
- a heartbeat pattern recognition device 30 for identifying the user as a valid user when the monitored heartbeat pattern matches with a previously stored valid user heartbeat pattern, wherein the control data generating means 22 is designed to generate the control data dependent on the circumstance whether the user has been or has not been identified as a valid user.

In the shown example, the heartbeat pattern recognition device 30 is coupled with a heartbeat pattern store 32 storing one or more valid user heartbeat patterns. Further, the control data generating means 22 is coupled with an ID code store 34 storing an ID code which may be incorporated into the control data to be transmitted. Further, the mobile transmitter unit 20 comprises a display 36 enabling visual outputs to the user and and operational control detection means 50 enabling inputs from the user to the mobile transmitter unit 20, wherein in the shown example the operational detection means 50 comprises a keyboard 52 formed by one or more keys, e.g. mechanically operable keys and/or "soft keys" on the (touch-sensitive) display 36.

In this example, when a "passive access system" is realized, the control data transmitting means 24 is further designed for receiving so-called request signals wirelessly transmitted from the vehicle-side controlling device 5. If the mobile transmitter unit 20 reaches an approaching area around the vehicle 1, the control data generating means 22 generates e.g. control data constituting a reply comprising the ID code stored in the store 34, if the user has been identified as a valid user.

Fig. 3 shows a block diagram of another technical implementation of a mobile transmitter unit 100. This implementation is in particular suitable for realizing the already described mobile transmitter unit 20 of Fig. 2.

The mobile transmitter unit 100 comprises a software-controlled processing device 102 which is coupled with a digital storing device 104 for storing the software controlling the processing device 102, the ID code of the mobile transmitter unit 100, and one or more valid user heartbeat patterns. The processing device 102 is further coupled with a transmitting device 106 (e.g. a bidirectional communication device comprising a Bluetooth device and/or an NFC device) for wirelessly transmitting control data generated by the processing device 102.

Furthermore, the processing device 102 is coupled with a display device 110 (e.g. touch-sensitive display), one or more keys forming a keyboard device 112, and a heartbeat sensor device (e.g. comprising one or more ECG sensors).

In this embodiment of Fig. 3, the processing device 102 in connection with the storing device 104 and as the case the keyboard 112 can constitute the control data generating means 22 or Fig. 2, and the processing device 102 in connection with the storing device 104 and the heartbeat sensor device 114 can constitute the heartbeat pattern monitoring device 28 and the heartbeat pattern recognition device 30 of Fig. 2.

The mobile transmitter unit 100 further comprises an attaching device 108 for attaching the mobile transmitter unit 100 to the respective limb of a user. The attaching device 108 is formed as an openable band (e.g. with velcro closure) and has a plurality of ECG sensors embedded at an inner side of the band (contacting the user's skin).

Referring again to Fig. 1, the system for access control for the vehicle 1 can e.g. operate as follows:
The mobile transmitter unit 20 (or 100) continuously monitors the heartbeat pattern of the user who wears the mobile transmitter unit at the wrist, and only when the monitored heartbeat pattern matches with a previously stored valid user heartbeat pattern,
the mobile transmitter unit will respond (e.g. by a Bluetooth device) to the receipt of a request signal sent by the means for wirelessly sending requests signals, which is incorporated into the vehicle-side controlling device 5. Via the Bluetooth connection between the mobile transmitter unit and the vehicle 1, the mobile transmitter unit transmits its ID code to the controlling device 5. If the ID code is correct, the controlling device 5 allows the user to initiate unlocking of the vehicle door 2 by actuating a door handle.

In the present example, actuating the door handle is detected by a door unlock sensor 7. In case of detection such intended door opening the door unlock sensor 7 provides a corresponding sensor signal to the controlling unit 5, which in turn causes a central unlocking of the vehicle 1, so that the user can open e.g. the door 2 for entering the vehicle 1.

A similar functionality can be provided e.g. for a central locking of the vehicle 1 by operating a door lock sensor 8 (e.g. a button to be pressed by a user) arranged close to or at the door handle of the door 2, and also for the functionality of e.g. a start/stop button 3 for starting/stopping a driving motor of the vehicle 1. This means, that also the conduction of such functions can necessitate that the user has been identified as a valid user before the respective function is actually conducted.

Departing from the described example, the access system of the vehicle 1 may be designed also as an "active access system" as already described above. This means that the user can actively effect that control signals for initiating an unlocking and/or locking one or more closure devices of the vehicle 1 are sent by the mobile transmitter unit to the vehicle 1, for example by pressing a corresponding key (button) on the mobile transmitter unit, whereupon the respective closure device(s) of the vehicle 1 is/are unlocked or locked (or e.g. opened or closed in case of a tailgate), if the transmitted ID code is correct, wherein the incorporation of this correct ID code into the transmitted control signals necessitates a previous identification of the user as a valid user.

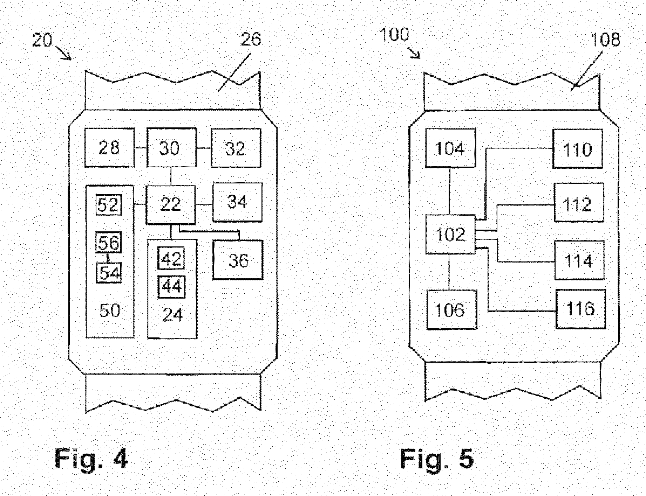

In a preferred further development of the invention, the mobile transmitter unit has "gesture recognition capabilities". With reference to Figs. 4 and 5, an example of such embodiment will be described, wherein the same reference signs are used for the same components and essentially only the differences to the embodiments described above (Figs. 2 and 3) will be discussed.

Fig. 4 shows a block diagram of a mobile transmitter unit 20, comprising of all components of the already described example of Fig. 2. In addition, however, the operational control detection means 50 further comprises a motion pattern monitoring device 54 for monitoring a motion pattern of the mobile transmitter unit 20 (e.g. using one or more acceleration sensors), and a gesture recognition device 56 for detecting an intended operational action of the user, wherein such action is detected (recognized) when the monitored motion pattern matches with a previously stored motion pattern assigned to the respective operational action.

Fig. 5 shows a block diagram of another technical implementation of such mobile transmitter unit, similar to the implementation of the mobile transmitter unit 100 of Fig. 3, but additionally equipped with a motion sensor device 116 (e.g. one or more acceleration sensors) coupled with the processing device 102.

With such mobile transmitter unit, in particular, it is possible to for a user to define individual gestures for inputting particular information to the mobile transmitter unit.

For example, if an "passive access system" for a vehicle as e.g. the vehicle 1 is provided, such predefined (preferably free configurable) gestures can be provided as a means for inputting control commands for initiating particular functions of the vehicle 1. For example, initiation of a central unlocking of the vehicle 1 can be realized by conducting a predefined gesture for this function (instead of operating the door handle as in the example of Figs. 2 and 3). Similar, particular gestures can be provided for a locking function (central locking, or locking of at least one vehicle closure device) by particular gestures (instead of manual operations as described for the example of Figs. 2 and 3).

In this embodiment of Fig. 5, the processing device 102 in connection with the storing device 104 and the motion sensor device 116 constitutes the motion pattern monitoring device 54 and the gesture recognition device 56 of Fig. 4.

In the above described embodiments, the vehicle 1 is equipped with an NFC reader 6 coupled to the controlling device 5. The NFC reader 6 can be e.g. provided for use in a case, in which a battery supplying the mobile transmitter unit is flat. According to an embodiment, in this case a user has to activate the NFC reader 6 through vehicle specific procedures and then to place the mobile transmitter unit near the NFC reader 6 mounted near the vehicle door handle. When the NFC reader 6 has read the data from the mobile transmitter unit (equipped with corresponding NFC equipment e.g. RFID tag) and the data is valid (e.g. containing a correct ID code), the NFC reader 6 communicates the successful authentication to the controlling device 5, which in turn enables within a predetermined time after receiving the authentication confirmation to unlock the door 2 (or e.g. conduct a central unlocking) by means of operating the door handle.

### List of reference signs

- 1: vehicle
- 2: vehicle door
- 3: start/stop button
- 5: controlling device
- 6: NFC Reader
- 7: door unlock sensor
- 8: door lock sensor
- 20: mobile transmitter unit
- 22: control data generating means
- 24: control data transmitting means
- 26: attachment means
- 28: heartbeat pattern monitoring device
- 30: heartbeat pattern recognition device
- 32: heartbeat pattern store
- 34: ID code store
- 36: display
- 42: Bluetooth device
- 44: NFC device
- 50: operational control detection means
- 52: keyboard
- 54: motion pattern monitoring device
- 56: gesture recognition device
- 100: mobile transmitter unit
- 102: processing device
- 104: storing device
- 106: transmitting device
- 108: attaching device
- 110: display device
- 112: keyboard device
- 114: heartbeat sensor device
- 116: motion sensor device

## Claims

1. A mobile transmitter unit (20) for wirelessly transmitting control data to a controlling device (5) for controlling at least one function of a technical system (1) taking into account the transmitted control data, wherein the mobile transmitter unit (20) comprises
- a control data generating means (22) for generating control data,
- a control data transmitting means (24) for wirelessly transmitting the generated control data,
**characterized in that** the mobile transmitter unit (20) further comprises
- an attachment means (26) for attaching the mobile transmitter unit (20) to a limb of a user,
- a heartbeat pattern monitoring device (28) for monitoring a heartbeat pattern of the user when the mobile transmitter unit (20) is attached to the limb of the user,
- a heartbeat pattern recognition device (30) for identifying the user as a valid user when the monitored heartbeat pattern matches with a previously stored valid user heartbeat pattern,
and **in that** the control data generating means (22) is designed to generate the control data dependent on the circumstance whether the user has been or has not been identified as a valid user.

2. The mobile transmitter unit (20) according to claim 1, wherein the control data generating means (22) is designed to incorporate a previously stored ID code into the control data to be transmitted at least when the user has been identified as a valid user.

3. The mobile transmitter unit (20) according to any of the preceding claims, wherein the control data generating means (22) is designed to partially or completely refrain from generating the control data when the user has not been identified as a valid user.

4. The mobile transmitter unit (20) according to any of the preceding claims, wherein the control data generating means (22) is designed to modify at least one data element of the control data dependent on the circumstance whether the user has been or has not been identified as a valid user.

5. The mobile transmitter unit (20) according to any of the preceding claims, wherein the control data transmitting means (24) comprises at least one RF signal transmitting device, e.g. a Bluetooth device (42) and/or an NFC device (44) .

6. The mobile transmitter unit (20) according to any of the preceding claims, wherein the mobile transmitter unit (20) further comprises
- an operational control detection means (50) for detecting an intended operational action of the user,
and wherein the control data generating means (22) is further designed to generate the control data dependent on an intended operational action of the user detected by the operational control detection means (50).

7. The mobile transmitter unit (20) according to claim 6, wherein the operational control detection means (50) comprises
- a motion pattern monitoring device (54) for monitoring a motion pattern of the mobile transmitter unit (20),
- a gesture recognition device (56) for detecting an intended operational action of the user when the monitored motion pattern matches with a previously stored motion pattern assigned to the intended operational action.

8. A combination (5, 20) of
- a controlling device (5) for controlling at least one function of a technical system (1) taking into account control data wirelessly transmitted to the controlling device (5), and
- a mobile transmitter unit (20) according to any of the claims 1 to 7 for generating and wirelessly transmitting the control data to the controlling device (5).

9. The combination (5, 20) according to claim 8, wherein the controlling device (5) is designed to trigger an execution of the at least one function when corresponding control data have been transmitted to the controlling device (5).

10. The combination (5, 20) according to claim 8 or 9, wherein the technical system (1) is a motor vehicle.

11. The combination (5, 20) according to any of the claims 8 to 10, wherein the at least one function comprises unlocking and/or locking a closure device (2) of the technical system (1) .

12. The combination (5, 20) according to any of the claims 8 to 11, wherein the at least one function comprises starting and/or stopping a driving motor of the technical system (1) .

13. A method for controlling at least one function of a technical system (1), comprising
- controlling at least one function of a technical system (1) by means of a controlling device (5), taking into account control data wirelessly transmitted to the controlling device (5), and
- using a mobile transmitter unit (20) according to any of the claims 1 to 7 for generating and wirelessly transmitting the control data to the controlling device (5).
